# EUROPEAN PATENT APPLICATION

(11) **EP 1 887 720 A2**
(43) Date of publication of application: **13.02.2008**
(21) Application number: 07113868.9
(22) Date of filing: 06.08.2007
(51) Int. Cl.: H04H 1/00

(54) **Apparatus and method for handover of digital broadcasting reception terminal**

(30) Priority: 07.08.2006 KR 20060074347
(71) Applicant: Samsung Electronics Co., Ltd., Suwon-si, Gyeonggi-Do (KR)
(72) Inventor: Ha, Ji-Won c/o Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed is a method for a handover of a digital broadcasting reception terminal employing a time division multiplexing scheme, which periodically receives broadcast data through each of one or more broadcasting channels provided in a predetermined frequency band, the method including the steps of: when broadcast data of a channel selected by a user in a current cell is received, detecting handover determination information from the received broadcast data; determining if it is necessary to perform a handover to an adjacent cell by using the handover determination information; searching channels provided by the cell to which the terminal will be handed over for a channel providing broadcast data equal to that provided by the selected channel, when it is determined that it is necessary to perform a handover; and when a channel providing broadcast data equal to that of the selected channel is found, performing a handover to a corresponding cell and receiving broadcast data of the found channel. Accordingly, the digital broadcasting reception terminal employing the time division multiplexing scheme can quickly and stably perform a handover, so that the user can view a seamless broadcast although he/she moves from a current cell to an adjacent cell which uses a frequency and/or broadcast data reception time point different from that of the current cell.

## Description

The present invention relates to a digital broadcasting reception terminal, and more particularly to an apparatus and method for handover of a digital broadcasting reception terminal employing a time division multiplexing scheme.

In general, a broadcasting system, such as a Digital Video Broadcasting-Handheld (DVB-H) which compresses broadcast data including audio and video data in units of certain packets and broadcasts the data just as a wired/wireless Internet does, multiplexes broadcast data according to each broadcasting channel in a time division multiplexing scheme. According to the time division multiplexing scheme, the capacity of a transmission path is divided into time slots, i.e., time intervals, and packetized broadcast data according to the broadcasting channels are carried on the time slots.

Therefore, in the digital broadcasting system employing a time division multiplexing scheme, broadcasting stations broadcast data through each of one or more broadcasting channels in a frequency band, used by each broadcasting station, at a predetermined cycle.

Then, a digital broadcasting reception terminal decodes information about a starting point at which broadcast data of a channel selected by the user from among the broadcasted data starts broadcasting, and receives the broadcast data at a corresponding starting point, thereby receiving broadcast data from only the channel selected by the user. Accordingly, the user can view a digital broadcast of a channel which he/she wants.

However, since the sizes of time slots of channels included within one cycle are not always equal, and broadcast-data-transmission starting points according to channels are different depending on cells, even when the same broadcast is transmitted, reception timing for broadcast data of each channel has emerged as a hot issue.

Particularly, when cell change such as handover takes place, it is necessary for the digital broadcasting reception terminal to change a reception frequency and to quickly find out, in the changed frequency, the same broadcast as that received in a previous cell, in order to seamlessly provide the broadcast to the user. However, currently, there is no specific scenario to achieve seamless handover.

Accordingly, the present invention has been made to solve the above-mentioned problems occurring in the prior art, and it is the object of the present invention to provide an apparatus and method for handover of a digital broadcasting reception terminal employing a time division multiplexing scheme, which can provide a fast and seamless handover.

This object is solved by the subject matter of the independent claims.

Preferred embodiments are defined by the dependent claims. In accordance with an aspect of the present invention, there is provided a method for a handover of a digital broadcasting reception terminal employing a time division multiplexing scheme, which periodically receives broadcast data through each of one or more broadcasting channels provided in a predetermined frequency band, the method including when broadcast data of a channel selected by a user in a current cell is received, detecting handover determination information from the received broadcast data; determining if it is necessary to perform a handover to an adjacent cell by using the handover determination information; searching channels provided by the cell to which the terminal will be handed over for a channel providing broadcast data equal to that provided by the selected channel, when it is determined that it is necessary to perform a handover; and when a channel providing broadcast data equal to that of the selected channel is found, performing a handover to a corresponding cell and receiving broadcast data of the found channel.

In accordance with another aspect of the present invention, there is provided an apparatus for a handover of a digital broadcasting reception terminal employing a time division multiplexing scheme, which periodically receives broadcast data through each of one or more broadcasting channels provided in a predetermined frequency band, the apparatus including a digital broadcasting receiver for receiving broadcast data of a channel selected by a user in a current cell; a detector for detecting handover determination information from the broadcast data; and a controller for searching the cell to which the terminal will be handed over for a channel equal to the selected channel when it is determined through the handover determination information that it is necessary to perform a handover, and for performing a handover to a corresponding cell and causing broadcast data of a found channel to be received when the channel equal to the selected channel is found.

The above and other aspects, features, and advantages of the present invention will be more readily apparent from the following detailed description, when taken in conjunction with the accompanying drawings, in which:
FIG. 1 is a block diagram illustrating the configuration of a digital broadcasting reception terminal according to an embodiment of the present invention;
FIG. 2 is a detailed block diagram illustrating the configuration of a controller in the digital broadcasting reception terminal according to an embodiment of the present invention;
FIG. 3 is a flowchart illustrating a handover procedure of the digital broadcasting reception terminal according to an embodiment of the present invention;
FIG. 4 is a detailed flowchart illustrating a step of determining whether or not it is necessary to perform a handover by using handover determination information in the handover procedure of FIG. 3; and
FIG 5 is a detailed flowchart illustrating a step of performing a handover and then receiving broadcast data on the same channel as the handover procedure of FIG. 3.

Hereinafter, one exemplary embodiment of the present invention will be described with reference to the accompanying drawings. In the following description of the embodiment of the present invention, a detailed description of known functions and configurations incorporated herein will be omitted when it may obscure the subject matter of the present invention.

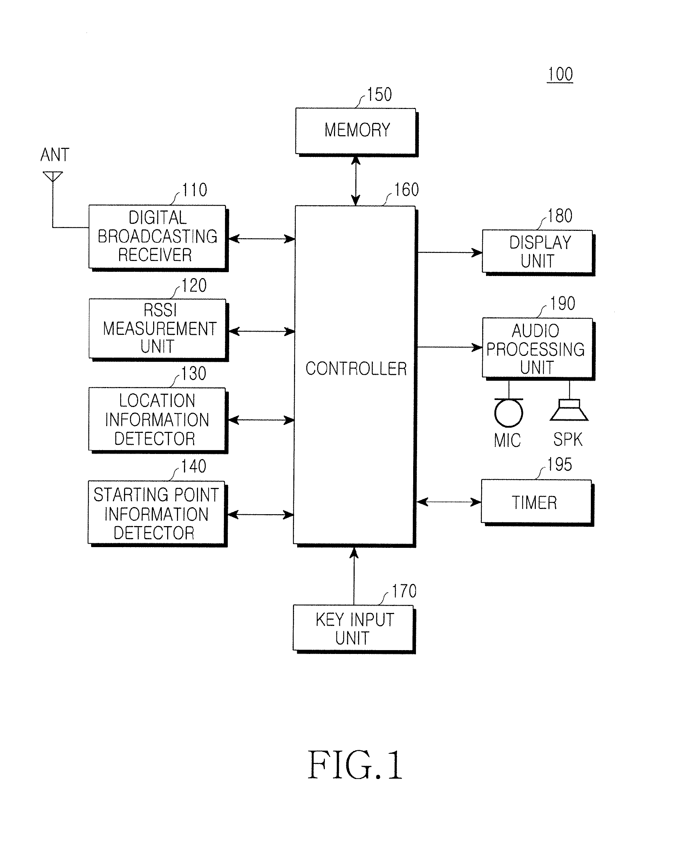

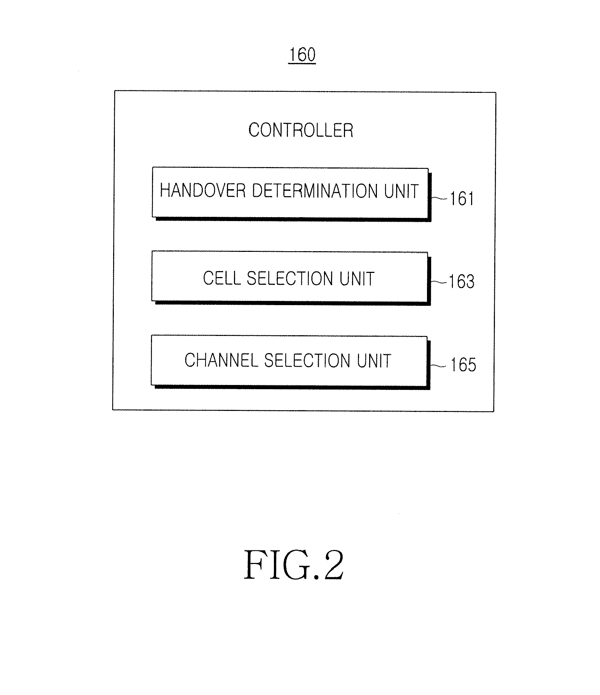

FIG. 1 is a block diagram illustrating the configuration of a digital broadcasting reception terminal 100 according to an embodiment of the present invention, and FIG 2 is a detailed block diagram illustrating the configuration of a controller 160 in the digital broadcasting reception terminal according to an embodiment of the present invention. Herein, it is assumed that the digital broadcasting reception terminal 100 according to the embodiment of the present invention corresponds to a digital broadcasting reception terminal 100 employing a time division multiplexing scheme, which periodically receives digital broadcast data through each of one or more broadcasting channels provided in frequency bands used by broadcasting stations.

The digital broadcasting reception terminal 100 includes a digital broadcasting receiver 110, a Received Signal Strength Indicator (RSSI) measuring unit 120, a location information detector 130, a starting point information detector 140, a memory 150, a controller 160, a key input unit 170, a display unit 180, an audio processing unit 190 and a timer 195.

When a broadcasting channel of a specific broadcasting station is selected by the controller 160, the digital broadcasting receiver 110 receives and demodulates digital broadcast data of the selected channel, among digital broadcast data through each of one or more broadcasting channels are provided in a frequency band used by a broadcasting station, and then outputs the demodulated digital broadcast frame to the controller 160. When the digital broadcasting system according to the present invention is a DVB-H broadcasting system, the digital broadcasting receiver 110 may be a DVB-H Orthogonal Frequency Division Multiplexing (OFDM) demodulator which OFDM-demodulates signals received from a broadcasting station transmitting DVB-H broadcast data and outputs digital broadcast data of the channel selected by a user.

The RSSI measurement unit 120 measures the RSSIs of signals received through the digital broadcasting receiver 110, i.e., the RSSIs of signals received according to cells, and outputs the measured RSSIs to the controller 160.

The location information detector 130 detects location information included in broadcast data when the digital broadcasting receiver 110 has received the broadcast data, and transfers the detected location information to the controller 160. Herein, the location information included in the broadcast data may include information representing that the current location corresponds to a cell boundary area, inter-cell vertex information, etc.

According to an embodiment of the present invention, the RSSI measurement unit 120 and location information detector 130 function to detect handover determination information from broadcast data received through the digital broadcasting receiver 110, in which the handover determination information includes the RSSI of a channel selected by the user and location information of the current cell.

The starting point information detector 140 detects starting point information, which refers to a starting point when broadcast data of the next cycle will be received, from the broadcast data received through the digital broadcasting receiver 110, and then transfers the starting point information to the controller 160. The starting point information is stored in the memory 150 by the controller 160. The memory 150 may include a separate region for storing starting point information according to each channel.

The memory 150 stores various information necessary for controlling the operations of the digital broadcasting reception terminal 100 according to an embodiment of the present invention. The memory 150 also stores starting point information that represents a time point when digital broadcast data according to broadcasting channels will be received, wherein the time point has been detected from digital broadcasting data according to the broadcasting channels by the controller 160. The starting point information is included in the header of digital broadcasting data according to each broadcasting channel, which is transmitted in a time division multiplexing scheme. The starting point information refers to a time value for the starting time of the next time slot of each broadcasting channel, i.e., a relative time value from a time point when current digital broadcast data of each broadcasting channel is broadcast to a time point when the digital broadcast data of the next time slot of the corresponding broadcasting channel starts to be broadcasted.

Meanwhile, the controller 160 stores the starting point information of digital broadcasting data, according to each broadcasting channel in the memory 150, in order to reduce current consumption by receiving digital broadcast data according to each broadcasting channel in accordance with the corresponding starting time.

The controller 160 controls the entire operation of the digital broadcasting reception terminal 100, according to an embodiment of the present invention, and decodes a digital broadcast stream output from the digital broadcasting receiver 110 and outputs the decoded stream to the display unit 180 and audio processing unit 190 through a video signal processor (not shown) and an audio signal processor (not shown).

The controller 160 detects starting point information from broadcast data received through the digital broadcasting receiver 110, and instructs the timer 195 to check a time from a time point when broadcast is currently received to a time point when the broadcast data of the next cycle starts to be received. For example, if the time corresponds to five seconds, the timer 195 counts down from five seconds to zero. When the timer 195 reaches a value of zero through such a count down, the controller 160 instructs the digital broadcasting receiver 110 to receive broadcast data of the next cycle.

When the controller 160 detects handover determination information, i.e., the RSSI and location information of the current cell, from broadcast data received through the digital broadcasting receiver 110, the controller 160 determines whether or not it is necessary to perform a handover based on the detected determination information.

To this end, the controller 160 may include a handover determination unit 161 for determining whether or not it is necessary to perform a handover based on the RSSI and the location information of the current cell, a cell selection unit 163 for determining a cell to which the terminal will be handed over according to a determination result of the handover determination unit 161, and a channel selection unit 165 for selecting a channel to be searched for in the determined cell.

When the RSSI is less than a preset reference value (i.e., a minimum RSSI), the handover determination unit 161 checks through the location information, determining whether the current location of the digital broadcasting reception terminal 100 corresponds to a cell boundary area. When the current location of the digital broadcasting reception terminal 100 corresponds to a cell boundary area or inter-cell vertex, the handover determination unit 161 measures the RSSI of a signal received from an adjacent cell by means of the RSSI measurement unit 120, and determines that it is necessary to perform a handover when the measured RSSI is equal to or greater than a reference value.

The cell selection unit 163 determines the adjacent cell, from which the RSSI equal to or greater than the reference value is measured, to which the terminal 100 will be handed over. Meanwhile, when there are two or more adjacent cells, it is preferred that an adjacent cell from which the highest RSSI has been measured is determined to be the cell to which the terminal 100 will be handed over.

When the controller 160 determines that it is necessary to perform a handover, and determines a cell to which the terminal 100 will be handed over, the controller 160 searches the cell, to which the terminal 100 will be handed over, for the same channel as that being received in the current cell. Then, when the same channel as that being received in the current cell has been found, the controller 160 controls the terminal 100 to be handed over to the corresponding cell and to receive the broadcast data from the corresponding cell. In this case, preferably, when the controller 160 searches the cell, to which the terminal 100 will be handed over, for the same channel as that being received in the current cell, the controller 160 performs the searching operation until receiving broadcast data of the next cycle of a channel (i.e., a channel first selected by the user) being received in the current cell.

When the same channel as the selected channel has been found from the cell to which the terminal 100 will be handed over as a result of the search, the controller 160 performs a handover operation and receives broadcast data of the searched channel through the digital broadcasting receiver 110. In this case, if the same channel as the selected channel has been found and broadcast data of the found channel is different from broadcast data received in the previous cell, the controller 160 receives the broadcast data of the found channel and performs the overall processing procedure necessary for broadcasting reception, which includes a step of extracting the starting point of the next cycle.

In contrast, if broadcast data received from the cell to which the terminal 100 will be handed over is equal to broadcast data received in the previous cell, the controller 160 detects only starting point information, which corresponds to a time point when broadcast data of the next cycle will be received, from the broadcast data, and then receives the broadcast data of the next cycle based on the starting point information.

The key input unit 170 receives a user operation signal such as a key input and transfers the signal to the controller 160.

The display unit 180 outputs various display data generated in the digital broadcasting reception terminal 100. Preferably, the display unit 180 includes a Liquid Crystal Display (LCD) or the like which can sufficiently support the resolution of broadcast data. If a touch-screen-type LCD is used for the display unit 180, the display unit 180 may function as an input unit.

The audio processing unit 190 modulates an electrical signal input through a microphone to convert the electrical signal into sound data. Also, the audio processing unit 190 demodulates encoded voice data input from the digital broadcasting receiver 110 into an electrical signal and then outputs the electrical signal through a speaker. In addition, the audio processing unit 190 may include a data codec for processing packet data and the like, and an audio codec for processing audio signals such as voice. The audio processing unit 190 may be integrated into the controller 160.

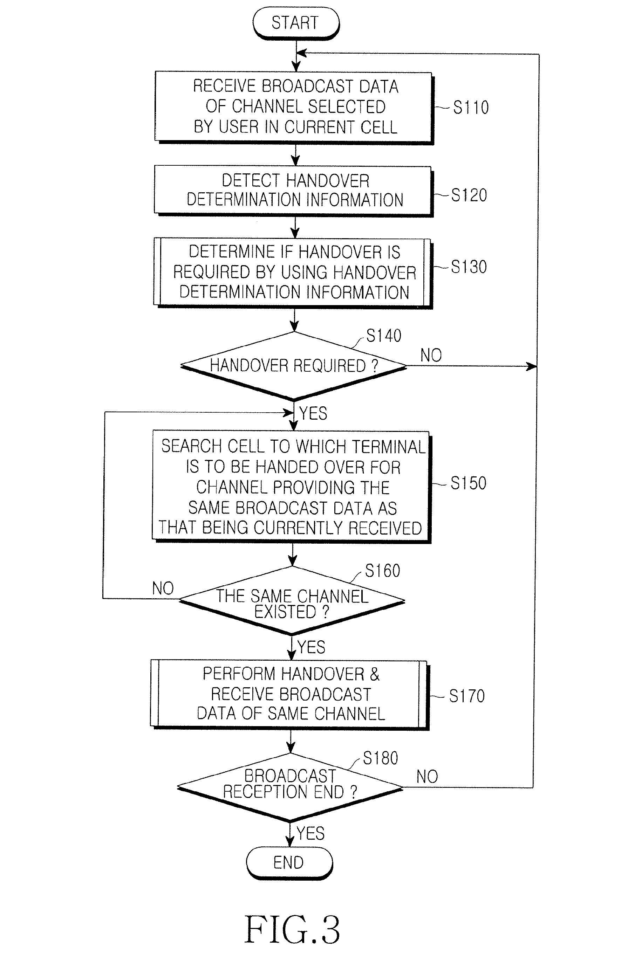

FIG. 3 is a flowchart illustrating a handover procedure of the digital broadcasting reception terminal according to an embodiment of the present invention.

The handover procedure of FIG. 3 will now be described with reference to FIGs. 1 and 2.

The controller 160 receives, through the digital broadcasting receiver 110, broadcast data from a channel selected by the user in the current cell, as requested by the user in step 110. I.e., the controller 160 receives only the selected channel's broadcast data , from among broadcast data periodically provided by each channel, based on the time division multiplexing scheme in a frequency band used by the selected channel's broadcasting station.

The controller 160 controls the RSSI measurement unit 120 and location information detector 130 to detect handover determination information from the received broadcast data in step 120. The handover determination information includes the RSSI of the selected channel and the location information of the current cell.

Meanwhile, the controller 160 controls the starting point information detector 140 to detect starting point information, which represents a time point when broadcast data of the next cycle will be received, from the received broadcast data, and then drives the timer 195 to count down a time value until the broadcast data of the next cycle is received.

The controller 160 determines whether or not it is necessary to perform a handover, i.e., to change the reception frequency of the digital broadcasting receiver 110, based on the handover determination information in step 130.

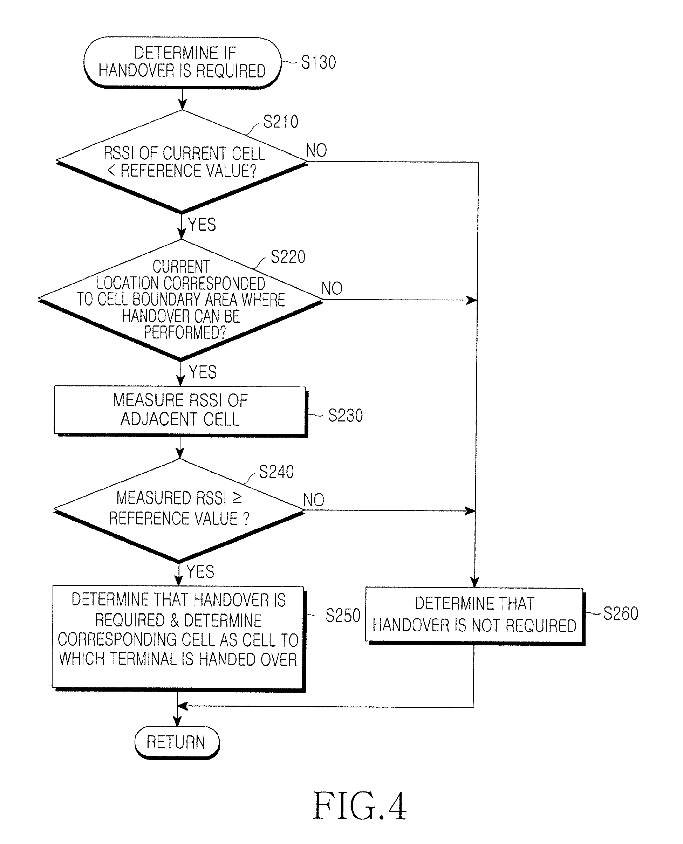

Step 130, determining whether or not it is necessary to perform a handover by using the handover determination information, will now be described in detail with reference to FIG. 4.

When the RSSI and the location information of the current cell are detected by the RSSI measurement unit 120 and location information detector 130, the controller 160 checks if the RSSI of the current cell is less than a preset reference value in step 210. The reference value refers to the minimum RSSI.

When the RSSI of the current cell is less than the reference value, the controller 160 checks through location information to determine if the current terminal location corresponds to a cell boundary area in which the terminal can be handed over in step 220.

When the current location of the digital broadcasting reception terminal 100 corresponds to a cell boundary area, the controller 160 controls the RSSI measurement unit 120 to measure the RSSI of an adjacent cell in step 230.

Then, the controller 160 checks if the measured RSSI equal to or greater than a reference value in step 240.

When the measured RSSI is equal to or greater than a reference value, the controller 160 determines that it is necessary to perform a handover, and determines the adjacent cell as a cell to which the terminal 100 will be handed over in step 250. In this case, if there are two or more adjacent cells, it is preferred that the controller 160 determines an adjacent cell from which the highest RSSI is received, as a cell to which the terminal 100 will be handed over.

Meanwhile, if it is determined either in step 210 that the RSSI of the current cell is equal to or greater than the reference value, or in step 220 that the current location of the terminal 100 does not correspond to the cell boundary area, or in step 240 that the RSSI of the adjacent cell is less than the reference value, the controller 160 determines that it is not necessary to perform a handover in step 260.

Referring again to FIG. 3, according to a result of the determination in step 130, the controller 160 determines whether or not it is necessary to perform a handover in step 140.

When it is determined that it is necessary to perform a handover, the controller 160 searches a cell to be determined as the cell to which the terminal will be handed over, for the same channel as that being received in the current cell in step 150. In this case, it is preferred that the controller 160 searches for the same channel as that being received in the current cell until broadcast data of the next cycle of the selected channel is received. Also, preferably, when broadcast data of the next cycle is received while the controller 160 is searching for the same channel as that being received in the current cell, the controller 160 performs a control operation such that the corresponding broadcast data is received and then the channel searching operation is again performed.

Then, the controller 160 checks if there is the same channel as that being received in the current cell, as a result of the searching in step 160.

When there is the same channel in another cell as that being received in the current cell, the controller 160 performs a handover, and receives broadcast data of the same channel through the digital broadcasting receiver 110 in step 170.

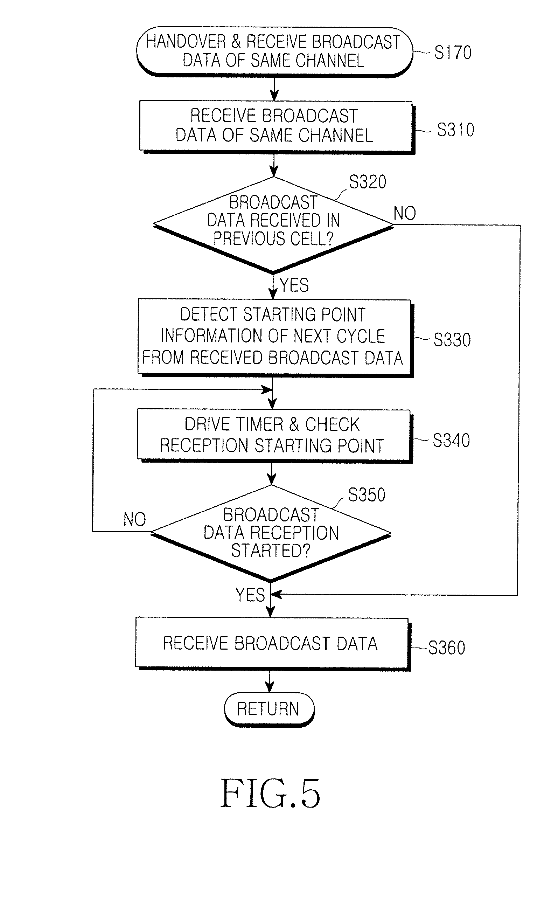

Step 170, performing a handover to another cell and receiving broadcast data of the same channel through the digital broadcasting receiver 110, will now be described in detail with reference to FIG 5.

When it is determined in step 160 of FIG. 3 there is the same channel in another cell as that being received in the current cell, the controller 160 performs a handover and receives broadcast data of the same channel in step 310.

The controller 160 checks whether or not the received broadcast data is identical to broadcast data received in the previous cell in step 320. I.e., the controller 160 checks if broadcast data received after the handover includes the same contents as that of the broadcast data received in the previous cell.

When broadcast data received after the handover is identical to broadcast data received in the previous cell, the controller 160 detects starting point information, which represents a time point when the broadcast data of the next cycle will be received, from the broadcast data received after the handover in step 330. In this case, preferably, the controller 160 deletes the broadcast data after detecting the starting point information.

Also, when the broadcast data received after the handover is not identical to broadcast data already-received in the previous cell, i.e., when the broadcast data received after the handover corresponds to broadcast data of the next cycle following the broadcast data received in the previous cell, it means that the broadcast data received after the handover corresponds to broadcast data including new content, so the controller 160 receives and outputs the corresponding broadcast data in step 360.

Meanwhile, when the starting point information has been detected in step 330, the controller 160 drives the timer 195 to check a time point when broadcast data of the next cycle begins to be received in step 340.

The controller 160 checks whether or not broadcast data of the next cycle starts being received according to a result of checking step 340 in step 350.

When the broadcast data starts being received, the controller 160 receives the broadcast data and returns in step 360.

Referring again to FIG 3, the controller 160 checks if there is a broadcast reception ending request while broadcast data is being received in the cell to which the terminal has been handed over in step 180.

If there is no broadcast reception ending request, controller 160 returns to step 110 and again performs the aforementioned procedure, but if there is a broadcast reception ending request, the controller 160 ends the broadcast reception.

As described above, according to the present invention, the digital broadcasting reception terminal employing the time division multiplexing scheme can quickly and stably perform a handover, so that the user can view a seamless broadcast although he/she moves from a current cell to an adjacent cell which uses a different frequency and/or broadcast data reception time point from that of the current cell.

While the present invention has been shown and described with reference to certain embodiments thereof, it will be understood by those skilled in the art that various changes in form and details may be made therein without departing from the scope of the invention as defined by the appended claims. Accordingly, the scope of the invention is not to be limited by the above embodiments but by the claims.

## Claims

1. A method for a handover of a digital broadcasting reception terminal employing a time division multiplexing scheme, which periodically receives broadcast data through each of one or more broadcasting channels provided in a predetermined frequency band, the method comprising the steps of:
when broadcast data of a channel selected by a user in a current cell is received, detecting handover determination information from the received broadcast data;
determining if it is necessary to perform a handover to an adjacent cell by using the handover determination information;
searching channels provided by the cell to which the terminal will be handed over for a channel providing broadcast data equal to that provided by the selected channel, when it is determined that it is necessary to perform a handover; and
when a channel providing broadcast data equal to that of the selected channel is found, performing a handover to a corresponding cell and receiving broadcast data of the found channel.

2. The method as claimed in claim 1, wherein the handover determination information includes a received signal strength indication, RSSI, of the selected channel and location information of the current cell.

3. The method as claimed in claim 2, wherein the determination step comprises:
checking if the RSSI is less than a preset reference value;
checking if a current location of the digital broadcasting reception terminal corresponds to a cell boundary area when the RSSI is less than the reference value;
measuring an RSSI of the adjacent cell when the current location of the digital broadcasting reception terminal corresponds to the cell boundary area; and
determining that it is necessary to perform a handover when the measured RSSI of the adjacent cell is equal to or greater than the reference value.

4. The method as claimed in claim 3, wherein the determination step further comprises determining the adjacent cell as a cell to which the digital broadcasting reception terminal will be handed over.

5. The method as claimed in claim 4, wherein, in the determination step, when there are at least two adjacent cells, an adjacent cell from which a highest RSSI is measured is determined as a cell to which the digital broadcasting reception terminal will be handed over.

6. The method as claimed in one of claims 1 to 5, wherein, in the search step, the channels provided by the cell to which the terminal will be handed over are searched for a channel providing broadcast data equal to that of the selected channel until next cycle's broadcast data of the selected channel is received.

7. The method as claimed in claim 6, wherein, in the search step, when a time point to receive the broadcast data of the next cycle is reached while a channel providing broadcast data equal to that of the selected channel is being searched for, the broadcast data of the next cycle is received and then the channel search is again performed.

8. The method as claimed in claim 6 or 7, wherein the reception step comprises:
when a channel equal to the selected channel is found, performing a handover and receiving broadcast data of the found channel;
detecting starting point information, which represents a time point when broadcast data of a next cycle is received, from the received broadcast data, when the received broadcast data corresponds to broadcast data received in a previous cell; and
receiving the broadcast data of the next cycle based on the detected starting point information.

9. An apparatus for a handover of a digital broadcasting reception terminal employing a time division multiplexing scheme, which periodically receives broadcast data through each of one or more broadcasting channels provided in a predetermined frequency band, the apparatus comprising:
a digital broadcasting receiver for receiving broadcast data of a channel selected by a user in a current cell;
a detector for detecting handover determination information from the broadcast data; and
a controller for searching the cell to which the terminal will be handed over for a channel equal to the selected channel when it is determined through the handover determination information that it is necessary to perform a handover, and for performing a handover to a corresponding cell and causing broadcast data of a found channel to be received when the channel equal to the selected channel is found.

10. The apparatus as claimed in claim 9, wherein the handover determination information includes a received signal strength indication, RSSI, of the selected channel and location information of the current cell.

11. The apparatus as claimed in claim 10, wherein the detector comprises:
an RSSI measurement unit for measuring an RSSI of the selected channel; and
a location information detector for detecting the location information of the current cell from the broadcast data of the channel.

12. The apparatus as claimed in claim 11, wherein the controller comprises:
a handover determination unit for determining if it is necessary to perform a handover by means of the RSSI and the location information of the current cell;
a cell selection unit for determining a cell to which the digital broadcasting reception terminal will be handed over based on a result of determination of the handover determination unit; and
a channel selection unit for selecting a channel to be searched for from the determined cell.

13. The apparatus as claimed in claim 12, wherein, when the RSSI of the selected channel is less than a preset reference value and a current location of the digital broadcasting reception terminal corresponds to a cell boundary area, the handover determination unit measures an RSSI of an adjacent cell by using the RSSI measurement unit, and determines that it is necessary to perform a handover when the measured RSSI of the adjacent cell is equal to or greater than the reference value.

14. The apparatus as claimed in claim 13, wherein the cell selection unit determines an adjacent cell from which an RSSI equal to or greater than the reference value is measured, as a cell to which the digital broadcasting reception terminal will be handed over.

15. The apparatus as claimed in claim 14, wherein when there are at least two adjacent cells, the cell selection unit determines an adjacent cell from which a highest RSSI is measured as a cell to which the digital broadcasting reception terminal will be handed over.

16. The apparatus as claimed in claim 9, wherein the controller searches the channels provided by the cell to which the terminal will be handed over for a channel providing broadcast data equal to that provided by the selected channel until next cycle's broadcast data of the selected channel is received.

17. The apparatus as claimed in claim 9, further comprising a starting point information detector for detecting starting point information, which represents a starting point when broadcast data of a next cycle will be received, from the received broadcast data, when the broadcast data received through the found channel is identical to that received in a previous cell.

18. The apparatus as claimed in claim 17, wherein the controller causes the broadcast data of the next cycle to be received based on the detected starting point information.
